# EUROPEAN PATENT APPLICATION

(11) **EP 2 103 657 A1**
(43) Date of publication of application: **23.09.2009**
(21) Application number: 07706469.9
(22) Date of filing: 10.01.2007
(51) Int. Cl.: C09B 67/46, C09B 61/00

(54) **DISPERSION SOLUTION OF HUMIC SUBSTANCE**

(71) Applicant: SHISEIDO COMPANY, LTD., Tokyo 104-8010 (JP)
(72) Inventor: KAMIYA, Yukiko, Yokohama-shi Kanagawa 224-8558 (JP); HATA, Hideo, Yokohama-shi Kanagawa 224-8558 (JP); SAKUMA, Kenichi, Yokohama-shi Kanagawa 224-8558 (JP); ISA, Takashi, Yokohama-shi Kanagawa 224-8558 (JP); KIMURA, Asa, Yokohama-shi Kanagawa 224-8558 (JP)
(74) Representative: Hart-Davis, Jason
(86) International application number: PCT/JP2007/050122
(87) International publication number: WO 2008/084530

(57) **Abstract**

A humic substance dispersion fluid is obtainable by at least milling at least one of a humic substance and a humic substance derivative.

## Description

### TECHNICAL FIELD

The present invention relates to a humic substance dispersion fluid.

### BACKGROUND ART

In order to impart a color tone of yellowish brown to black to an impounding reservoir such as a storage reservoir, a fishing pond or a water tank, an irrigation canal for a theme park, an artificial pond, or the like so that a natural atmosphere is created, a method of addition of a metal oxide such as a black iron oxide, a yellow iron oxide or a red iron oxide or a carbon is considered. However, a metal oxide commonly has its isoelectric point in a neutral region, and therefore, tends to aggregate easily in water. Furthermore, its specific gravity is large, and therefore, its sedimentation tends to occur easily. On the other hand, a carbon has a strong hydrophobic property, and therefore, it is difficult to cause its dispersion in water.

Meanwhile, a humic substance has been known for a substance having a color tone of yellowish brown to black. A humic substance has mainly been used as a building material (see Japanese Patent Application Publication No. H08-277174), a depurative for polluted water (see Japanese Patent Application Publication No. 10-277586), a depurative for soil (see Japanese Patent Application Publication No. 2003-145127), a soil improvement agent (see Japanese Patent Application Publication No. 05-023047), a cosmetic material (see Japanese Patent No. 3370289), and the like, by utilizing its physical and/or chemical properties or property.

When a humic substance is dispersed in an aqueous solvent, its color tone changes depending on its content in the aqueous solvent whereby a natural atmosphere is created. However, an industrially produced humic substance is a massive solid, and therefore, has a problem of its fast sedimentation even for its dispersion in an aqueous solvent.

### DISCLOSURE OF THE INVENTION

### PROBLEMS TO BE SOLVED BY THE INVENTION

The present invention aims to provide a humic substance dispersion fluid with a good dispersion property while the problem possessed by the aforementioned conventional technique is taken into consideration.

### MEANS FOR SOLVING THE PROBLEM

The invention as described in claim 1 is a humic substance dispersion fluid in which at least one of a humic substance and a humic substance derivative is dispersed in a dispersion medium, characterized by being obtainable by at least milling the at least one of a humic substance and a humic substance derivative.

According to the invention as described in claim 1, it is possible to provide a humic substance dispersion fluid with a good dispersion property, because of being obtainable by at least milling the at least one of a humic substance and a humic substance derivative.

The invention as described in claim 2 is the humic substance dispersion fluid as described in claim 1, **characterized in that** the dispersion medium contains an aqueous solvent.

According to the invention as described in claim 2, it is possible to provide its use for an additive for a composition based on an aqueous solvent, because the dispersion medium contains an aqueous solvent.

The invention as described in claim 3 is the humic substance dispersion fluid as described in claim 1, **characterized in that** a median diameter of the at least one of a humic substance and a humic substance derivative is 0.05 µm or more and less than 10 µm.

According to the invention as described in claim 3, it is possible to improve its dispersion property further, because a median diameter of the at least one of a humic substance and a humic substance derivative is 0.05 µm or more and less than 10 µm.

The invention as described in claim 4 is the humic substance dispersion fluid as described in claim 1, **characterized in that** a median diameter of the at least one of a humic substance and a humic substance derivative is 0.05 µm or more and 5 µm or less.

According to the invention as described in claim 4, it is possible to improve its dispersion property further, because a median diameter of the at least one of a humic substance and a humic substance derivative is 0.05 µm or more and 5 µm or less.

The invention as described in claim 5 is the humic substance dispersion fluid as described in claim 1, **characterized in that** no dispersing agent is contained.

According to the invention as described in claim 5, it is possible to improve its safety for the environment or a human body and to suppress generation of an air bubble, because no dispersing agent is contained.

The invention as described in claim 6 is the humic substance dispersion fluid as claimed in claim 1,
**characterized in that** the milling is wet-milling.

According to the invention as described in claim 6, it is possible to improve the efficiency of milling, because the milling is wet-milling.

The invention as described in claim 7 is the humic substance dispersion fluid as described in claim 1, **characterized in that** a content of the at least one of a humic substance and a humic substance derivative is 1 % by weight or more and 50 % by weight or less.

According to the invention as described in claim 7, it is possible to obtain a humic substance dispersion fluid with a good redispersion property, because a content of the at least one of a humic substance and a humic substance derivative is 1 % by weight or more and 50 % by weight or less.

### ADVANTAGEOUS EFFECT OF THE INVENTION

According to the present invention, it is possible to provide a humic substance dispersion fluid with a good dispersion property.

### BEST MODE FOR CARRYING OUT THE INVENTION

Next, the best mode for carrying out the present invention will be described.

A humic substance dispersion fluid according to the present invention, in which at least one of a humic substance and a humic substance derivative is dispersed in a dispersion medium, is obtainable by at least milling the at least one of a humic substance and a humic substance derivative. Such a humic substance dispersion fluid has a color tone of yellowish brown to black, and therefore, it is possible to provide its use for an additive for imparting the color tone. A humic substance is an end-product of microbial decomposition of a plant or the like and is a persistent polymer compound of straight-chain hydrocarbon and polycyclic aromatic compound, with a molecular weight of several thousand to about ten thousand, and it is possible to use a commercially available humic substance powder as a raw material. Additionally, for a humic substance derivative, there are provided salts and esters of nitrated humic acids, as described in Japanese Patent Application Publication No. 61-087609, Japanese Patent Application Publication No. 61-087610, Japanese Patent Application Publication No. 61-087611, and Japanese Patent Application Publication No. 61-087612, and the like.

In the present invention, the dispersion medium preferably contains an aqueous solvent. Thereby, it is possible to provide its use for an additive for a composition based on an aqueous solvent. For an aqueous solvent, there are provided water; buffers such as phosphate buffers, acetate buffers, lactate buffers and citrate buffers; alcohols such as ethanol and butanol; acetone, and the like. Additionally, it is possible to use an aqueous solvent singly or mix two or more kinds thereof.

When a fine particle(s) is/are stably dispersed in a dispersion medium to prepare a suspension fluid, a dispersing agent is used generally, but if a dispersing agent is contained during its agitating or flowing, an air bubble(s) may be generated. Therefore, it is preferable to contain no dispersing agent in a humic substance dispersion fluid according to the present invention in order to improve its safety for the environment or a human body and suppress generation of an air bubble(s), and in this case, it is possible to provide a composition composed of at least one of a humic substance and a humic substance derivative and an aqueous solvent. Additionally, a composition containing a dispersing agent may be provided, and for a dispersing agent, there are provided ionic surfactants, nonionic surfactants, amphoteric surfactants, water-soluble polymers, polymer electrolytes, and the like.

In a humic substance dispersion fluid according to the present invention, a content of the at least one of a humic substance and a humic substance derivative is preferably 1 % by weight or more and 50 % by weight or less and more preferably 5 % by weight or more and 30 % by weight or less. If the content is less than 1 % by weight, an effect of imparting a color tone may be small in the case of its addition to and use in a composition based on an aqueous solvent, and if it is more than 50 % by weight, its viscosity may be too high to be suitable for its wet-milling.

In a humic substance dispersion fluid according to the present invention, a median diameter of at least one of a humic substance and a humic substance derivative is preferably 0.05 µm or more and less than 10 µm and more preferably 0.05 µm or more and 5 µm or less. Furthermore, if the median diameter is 0.05 µm or more and 5 µm or less, it is preferable to contain 90 % by volume or more and 100 % by volume or less of a particle with a particle diameter of 0.1 µm or more and 8 µm or less. If the median diameter is less than 0.05 µm, turbidness may be difficult to occur when a humic substance dispersion fluid is added to impart a color tone. Also, if the median diameter is more than 10 µm, the dispersion property of a humic substance dispersion fluid may be degraded. Herein, a median diameter is a particle diameter (cumulative average diameter) at a point at which a cumulative curve is 50 % when the cumulative curve is obtained such that the total volume of one group of particle is 100 %, and has commonly been utilized as one of parameters for evaluating a particle size distribution. Additionally, it is possible to measure the median diameter by using a laser-diffraction/scattering-type particle size distribution measuring apparatus, such as a Microtrack particle size distribution measuring apparatus 9320-HRA (produced by NIKKISO Co., Ltd.).

In the present invention, it is possible to mill a humic substance by using a publicly-known milling method. For a publicly-known milling method, there are provided dry-milling methods, wet-milling methods, and combinations thereof, and it is preferable to use a wet-milling method. Thereby, it is preferable to narrow a particle size distribution.

For a mill used for a dry-milling method, it is possible to use a jet mill, a vibration mill, a pulverizer, or the like.

For a mill used for a wet-milling method, it is possible to use a medium agitating mill, and specifically, there are provided a bead mill, a sand grinder mill, a ball mill, Micros, and the like. In a medium agitating mill, it is possible to use a medium such as a glass bead, an alumina bead, a zirconia bead, or a titania bead, and a milling container including a mixture of at least one of a humic substance and a humic substance derivative and a solvent and a medium is revolved by using a rotary disk or a rotor whereby it is possible to conduct milling. Additionally, for a solvent, it is possible to use the aforementioned aqueous solvent.

The content of the at least one of a humic substance and a humic substance derivative in the mixture is not particularly limited and is preferably 1 % by weight or more and 50 % by weight or less and more preferably 5 % by weight or more and 30 % by weight or less. The median diameter of the at least one of a humic substance and a humic substance derivative before its milling is not particularly limited and is preferably 1 µm or more and 500 µm or less and more preferably 1 µm or more and 100 µm or less. Furthermore, the diameter of the medium is preferably 0.1 mm or more and 5 mm or less. Milling temperature is not particularly limited and is preferably 50 °C or less and more preferably 30 °C or less.

A humic substance dispersion fluid according to the present invention may be subjected to homogenizing treatment by using an apparatus such as a colloid mill, a TK homomixer, a high-pressure homogenizer or an extra-high-pressure homogenizer, in order to keep a good dispersion condition.

Additionally, it is possible to use a humic substance dispersion fluid according to the present invention as an additive for imparting a color tone of yellowish brown to black to a composition based on an aqueous solvent and otherwise it is possible to use it for applications of coloring a paper, a building material, a fiber, a wood and the like.

### [Examples]

Examples according to the present invention will be presented below. Additionally, the present invention is not limited to them.

### (Comparison example 1)

A humic substance was dry-pulverized by using a pulverizer and subsequently was suspended in water such that its content was 40 % by weight.

### (Examples 1 - 6)

A humic substance was dry-pulverized by using a pulverizer and subsequently was suspended in water such that its content was 40 % by weight. Then, the obtained suspension liquid was wet-milled by using a sand grinder mill loaded with zirconia beads with a diameter of 1 mm to prepare humic substance dispersion liquids presented in Table 1.

**Table 1**

| | Median diameter (µm) | Sedimentation level | Transparency (degree) |
|---|---|---|---|
| Comparison example 1 | 10 | C | 100 or more |
| Example 1 | 8 | B | 100 |
| Example 2 | 5 | A | 85 |
| Example 3 | 3 | A | 70 |
| Example 4 | 1 | A | 43 |
| Example 5 | 0.5 | A | 37 |
| Example 6 | 0.1 | A | 33 |
| Example 7 | 0.05 | A | 40 |

### (Evaluation methods and Evaluation results)

Median diameters with respect to the humic substance dispersion liquids were measured by using a Microtrack particle size distribution measuring apparatus 9320-HRA (produced by NIKKISO Co., Ltd.).

Sedimentation levels were evaluated by comparing the turbidities of the humic substance dispersion liquids immediately after their dilution up to 9 ppm with the turbidities of their supernatants after their standing at rest for one day. Their determinations were made such that the changes of the turbidities being less than 30 %, 30 % or more and less than 60 %, and 60% or more were "A", "B", and "C", respectively. Additionally, the turbidities were measured by using an integrating-sphere-type turbidity meter TR-35 (produced by Mitsubishi Chemical Industries Co., Ltd.).

Transparencies are indices that indicate their degrees of turbidness in water, and were measured by using a transparency meter ST-100 (produced by AS ONE Corporation), after the humic substance dispersion liquids were diluted up to 9 ppm.

## Claims

1. A humic substance dispersion fluid in which at least one of a humic substance and a humic substance derivative is dispersed in a dispersion medium, **characterized in that** the humic substance dispersion fluid is obtainable by at least milling the at least one of a humic substance and a humic substance derivative.

2. The humic substance dispersion fluid as claimed in claim 1, **characterized in that** the dispersion medium contains an aqueous solvent.

3. The humic substance dispersion fluid as claimed in claim 1, **characterized in that** a median diameter of the at least one of a humic substance and a humic substance derivative is 0.05 µm or more and less than 10 µm.

4. The humic substance dispersion fluid as claimed in claim 1, **characterized in that** a median diameter of the at least one of a humic substance and a humic substance derivative is 0.05 µm or more and 5 µm or less.

5. The humic substance dispersion fluid as claimed in claim 1, **characterized in that** no dispersing agent is contained.

6. The humic substance dispersion fluid as claimed in claim 1, **characterized in that** the milling is wet-milling.

7. The humic substance dispersion fluid as claimed in claim 1, **characterized in that** a content of the at least one of a humic substance and a humic substance derivative is 1 % by weight or more and 50 % by weight or less.
